Europäisches Patentamt

European Patent Office

Office européen des brevets

(19)

(11) Veröffentlichungsnummer: **0 101 090**
**B1**

(12) **EUROPÄISCHE PATENTSCHRIFT**

(45) Veröffentlichungstag der Patentschrift:
**30.03.88**

(51) Int. Cl.⁴: **G 01 N 27/46**

(21) Anmeldenummer: **83108032.0**

(22) Anmeldetag: **13.08.83**

(54) **Fremdenergiefreie Sonde zur Bestimmung des Gehaltes an dissoziierbaren polaren Flüssigkeiten.**

(30) Priorität: **17.08.82 DE 3230507**

(43) Veröffentlichungstag der Anmeldung:
**22.02.84 Patentblatt 84/8**

(45) Bekanntmachung des Hinweises auf die Patenterteilung:
**30.03.88 Patentblatt 88/13**

(84) Benannte Vertragsstaaten:
**AT BE CH FR GB IT LI LU NL SE**

(56) Entgegenhaltungen:
**DE - A - 2 651 136**
**DE - A - 2 659 701**
**GB - A - 999 948**

(73) Patentinhaber: **Kernforschungsanlage Jülich Gesellschaft mit beschränkter Haftung, Postfach 1913, D-5170 Jülich 1 (DE)**

(72) Erfinder: **Stockmeyer, Rolf, Dr., Sengelskamp 37, D-5172 Linnich-Tetz (DE)**

## Beschreibung

Die Erfindung bezieht sich auf ein Verfahren zur Herstellung einer fremdenergiefreien Sonde zur Bestimmung des Gehaltes an dissoziierbaren polaren Flüssigkeiten in Gasen, ausgedehnten Körpern, Schüttungen von körnigem Material oder elektrisch nicht leitenden Flüssigkeiten. Die Erfindung bezieht sich ferner auf die zur Durchführung des Verfahrens einsetzbare fremdenergiefreie Sonde.

In Trocknungsprozessen spielt für deren Verlauf ausser der Temperatur im Trocknungsgut und dem im Gut herrschenden Druck auch die Konzentration der Flüssigkeit (beispielsweise Wasser, Alkohol, Aceton) und deren Konzentrationsgradient eine Rolle. Um den Trocknungsprozess im Hinblick auf eine Einsparung von nutzbarer Arbeit durch Variation der Temperatur und der Druckprofile optimieren zu können, ist es wünschenswert, eine Sonde zur Verfügung zu haben, die es ermöglicht, die Konzentration der Flüssigkeit messend zu verfolgen.

Ein weiterer Anwendungsbereich einer Sonde zur Messung eines Flüssigkeitsgehaltes betrifft die Änderung des Wassergehaltes im Boden im Zusammenhang mit energiewirtschaftlichen Fragen.

Wasserbewegungen im Boden sind in mehrfacher Hinsicht von Bedeutung für Energiesysteme. Es ist daher wünschenswert, sie kontinuierlich in situ messen zu können. Beim Kohlebergbau (insbesondere Tagebau) wird das Grundwasser weiträumig abgepumpt, und es gibt Auseinandersetzungen wegen der Folgen. Aber es gibt keine Messungen, die zeigen, in welchem Umfang die Feuchtigkeit im Erdreich, beispielsweise in der Tiefe von Baumwurzeln oder unter Gebäuden, davon betroffen ist, bzw. inwieweit der Einfluss der Witterung auf die Bodenfeuchte noch dominant ist. Dabei kommt es auf Wasserkonzentrationen an, welche die Schichtmineralien (Lehm) quellen und schrumpfen lassen, und auf geringe Wasserdampfdichten im Boden, die für die Vegetation in der trockenen Jahreszeit wichtig sind.

Ein anderer Anwendungsbereich für eine Sonde zur Messung des Wassergehaltes betrifft die Nutzung des Bodens als Wärmespeicher. Wärmetransport und Wassertransport sind miteinander gekoppelt. Physikalisch-mathematische Modelle für Erdwärmespeicher und Erdwärmepumpen bedürfen daher zu ihrer experimentellen Verifizierung einer einfachen, kontinuierlichen in-situ-Messmethode der Feuchtigkeit.

Im Bereich der Kernenergienutzung liegt das Problem an, die Wärmetransportprozesse über Endlagerstätten zu prognostizieren. Die Aufheizung der Sedimentschichten über Endlagerstätten verringert den Wassergehalt. Dadurch nimmt die Wärmeleitfähigkeit ab, und der Temperaturgradient steigt infolgedessen weiter an. Die Messung des Wassergehaltes ist daher auch in diesem Falle wünschenswert.

Methoden zur Messung des Wassergehaltes sind bekannt. So ist bekannt, dem Trocknungsgut Proben zu entnehmen, und den Flüssigkeitsgehalt durch Wiegen, oder auch anspruchsvollere Methoden, wie Lichtspektroskopie, Neutronenspektroskopie, Mikrowelleabsorption, zu bestimmen.

Für kontinuierliche in-situ-Messungen sind im Prinzip offene Kondensatoren als Sonden einsetzbar, deren Kapazität und Verlustfaktor abhängen von dem Wassergehalt und von der Temperatur des Dielektrikums über dessen dielektrische Funktion $\varepsilon(\omega)\varepsilon' + \varepsilon''$. Die Verwendung derartiger Sonden ist jedoch messtechnisch sehr anspruchsvoll und nur bei kleineren Entfernungen (etwa 1 m) zwischen der Sonde und der Kapazitätsmessbrücke anwendbar.

Es ist Aufgabe der Erfindung, ein Verfahren zur Herstellung einer Sonde sowie eine Sonde zu entwickeln, die zur Bestimmung des Gehaltes an dissoziierbaren polaren Flüssigkeiten einsetzbar und für kontinuierliche Messungen geeignet ist.

Diese Aufgabe wird — ausgehend von eingangs beschriebenen Verfahren — hinsichtlich der Herstellung der Sonde durch ein Verfahren gelöst, bei dem Pulver eine Körnung im Bereich zwischen 0,001 bis 1 mm aus einem elastisch verformbaren Material kristalliner oder amorpher Struktur mit wenigstens zum Teil ionischer Verbindung und einem spezifischen Widerstand von wenigstens $10^5$ Ohm/cm zwischen zwei Elektroden unter einem Druck von wenigstens 100 bar zusammengepresst und auf Dauer unter Druck gehalten wird, wobei wenigstens ein Teil der das Pulver unter Druck haltenden Teile für die nachzuweisende Flüssigkeit in der Umgebung der Sonde durchlässig ist.

Das Zusammenpressen des Pulvers kann von Hand (z.B.: mittels einer oder mehrerer zwei Druckplatten zusammenpressender Schrauben) oder maschinell erfolgen, wobei es hinsichtlich des aufzuwendenden Druckes nur auf den in der Sonde angestrebten und auf Dauer aufrecht erhaltenen Enddruck ankommt. Da dieser von der Auslegung der den Druck aufnehmenden Teile abhängt, sollten diese so beschaffen sein, dass ein Druck in der Sonde von wenigstens 100 bar aufrechterhalten werden kann. Dabei ist es selbstverständlich, dass als druckaufnehmendes Pulver nur solches in Frage kommt, das sich bei dem anzuwendenden Druck elastisch verformt und nicht etwa Fliessverhalten aufweist.

Zweckmässigerweise werden als unter Druck zu setzende Materialien $Al_2O_3$. $SiO_2$, Schichtsilikate (Lehm, Tonerde), Aluminosilikate mit Gerüststruktur (Zeolithe), NaCl, MgO oder ZnO verwendet.

Wie sich gezeigt hat, geben die so hergestellten Sonden eine elektrische Leistung ab, die von der Adsorption bzw. Desorption polarer Moleküle abhängt. Im quasistationären Betrieb — wenn die Feuchte sowohl in der Umgebung der Sonde als auch im Sondenmaterial gleichmässig verteilt ist — kann diese elektrische Leistung als Mass für den Gehalt des zu untersuchenden Mediums an polaren Flüssigkeiten dienen. Dabei sind für den Fall, dass der Flüssigkeitsgehalt eines festen Körpers oder einer Schüttung von körnigem Material gemessen werden soll, zweckmässigerweise Sonden zu verwenden, deren unter Druck stehendes Material aus dem gleichen Material besteht, wie das zu untersuchende Medium. Für den Fall, dass das Sondenmaterial sich von dem zu untersuchenden Medium unterscheidet, sind die Sonden zu eichen, indem beispielsweise die von der Sonde abgegebene elektrische Leistung in Abhängigkeit vom Flüssigkeitsgehalt kleiner Proben des zu untersuchenden Mediums gemessen wird. Die so geeichten Sonden können für in-situ-Messungen in dem zu untersuchenden Medium eingesetzt werden.

Im nichtstationären Betrieb – wenn sich die Feuchte in der Sonde noch verändert – ist eine quantitative Angabe nicht möglich, da die Sondenspannung dann oszilliert. Diese Oszillationen geben dann aber einen Hinweis auf die gerade stattfindende Änderung der Feuchte.

Die der Erfindung zugrundeliegende Aufgabe wird – ausgehend von einer Sonde gemäss dem Oberbegriff des Anspruchs 3 – durch eine Sonde gelöst, die zwei einander gegenüberliegende Elektroden und einen oder mehrere, wenigstens einen Teil des zwischen den Elektroden befindlichen Raumes druckfest einschliessende Teile sowie ein im Raum durch die genannten Teile unter einem Druck von mindestens etwa 100 bar stehendes Pulver einer Körnung im Bereich zwischen 0,001 und 1 mm aufweist, das aus einem elastisch verformbaren Material kristalliner oder amorpher Struktur mit wenigstens zum Teil ionischer Bindung und einem spezifischen Widerstand von wenigstens $10^5$ Ohm/cm besteht, wobei wenigstens eine Elektrode und/oder wenigstens ein Teil der den Raum druckfest einschliessenden Teile für die nachzuweisende Flüssigkeit in der Umgebung der Sonde durchlässig ist.

Die Durchlässigkeit für die Feuchte kann dadurch erzielt werden, dass wenigstens eine der Elektroden aus porösem, druckbeständigem und elektrisch leitfähigem Material besteht. Es kann daher zweckmässig sein, die für die Feuchte durchlässige Elektrode aus Sintermetall, wie Sinterstahl, aus Metallgewebe oder aus einem Keramikkörper mit aufgebrachter leitfähiger Schicht, wie einem $Al_2O_3$-Körper mit aufgebrachter poröser Metallschicht oder aufliegender Graphitfolie, herzustellen.

Dabei ist es vorteilhaft, dass die Elektroden und die den Raum zwischen den Elektroden druckfest einschliessenden Teile so dimensioniert sind, dass das Verhältnis von Oberfläche zu Volumen des eingeschlossenen Raumes möglichst gross ist.

Eine zweckmässige Ausführungsform der Sonde gemäss der Erfindung weist eine stab-, oder rohrförmig ausgebildete Innenelektrode und eine die Innenelektrode umschliessende rohrförmige Aussenelektrode auf, wobei sich zwischen den Elektroden das unter Druck stehende Material befindet. Die Aussenelektrode besteht dabei zweckmässigerweise aus einem von einer Graphitfolie umgebenen Metallnetz.

Eine weitere zweckmässige Ausführungsform der Sonde ist gekennzeichnet durch zwei plattenförmig ausgebildete Elektroden, zwischen denen sich das unter Druck stehende Material befindet. Die Elektroden können dabei scheibenförmig ausgebildet sein. In diesem Falle besteht eine zweckmässige Ausführungsform der Sonde darin, dass der zwischen den Elektroden für das unter Druck stehende Material vorgesehene Raum durch einen zwischen den beiden Elektrodenscheiben befindlichen O-Ring abgeschlossen ist, und die beiden Elektrodenscheiben über zwei Druckscheiben unter Druck gesetzt sind.

Als Material für die plattenförmig ausgebildeten Elektroden kann CuBe-Sintermetall vorgesehen sein.

Das Prinzip der Sonde wird anhand einer in der Zeichnung wiedergegebenen Zeichnung erläutert. Ausserdem sind in der Zeichnung verschiedene Ausführungsformen der Sonde schematisch dargestellt, sowie die Sondenspannung verschiedener Sonden bei unterschiedlichen Trocknungsvorgängen sowie beispielsweise bei Wasseraufnahmen wiedergegeben.

Es zeigen

Figur 1 die Darstellung des Prinzips der Sonde

Figur 2 die Darstellung einer zylindrisch ausgebildeten Sonde mit rohrförmig ausgebildeter Innenelektrode

Figur 3 die Darstellung einer zylindrisch ausgebildeten Sonde mit einer drahtförmigen Innenelektrode

Figur 4 Messdiagramm der Sondenspannung bei der Wasseraufnahme eines Zeolithblockes

Figur 5 Messdiagramm der Sondenspannung bei der Trocknung eines Zeolithblockes

Figur 6 die Darstellung einer plattenförmigen Sonde.

Figur 7 Messdiagramm der mit 10 kΩ Lastwiderstand gemessenen Spannung einer plattenförmigen Sonde beim Trocknen an Luft bei Raumtemperatur.

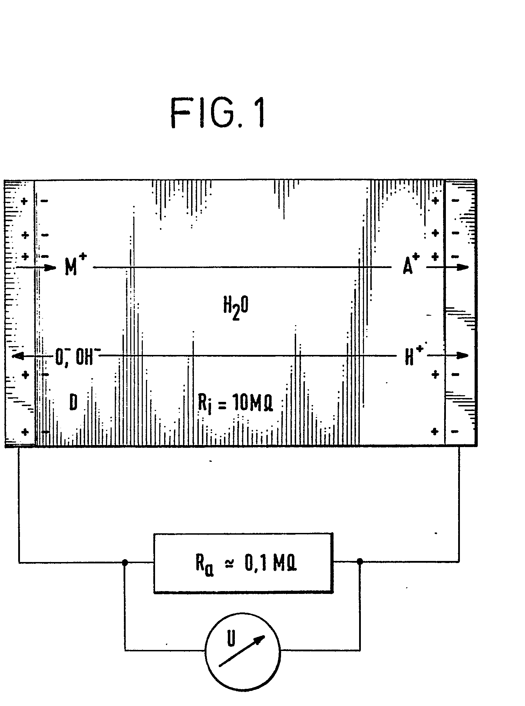

In Figur 1 ist das unter Druck gesetzte Material der Sonde mit D (Abk. für Dielektrikum), und es sind die beiden Elektroden mit E bezeichnet. Der Innenwiderstand der Sonde beträgt beispielsweise $R_i = 10$ MOhm.

Durch das Einpressen des feinkörnigen, ionenaufweisenden Dielektrikums wird eine Polarisation erzeugt, die an der rechten und linken Elektrode elektrische Oberflächenfelder mit entgegengesetzter Richtung bezüglich der Oberflächennormalen aufbaut. An beiden Grenzschichten wird ein Ladungsdurchtritt für positive Ladungsträger von links nach rechts und für negative Ladungsträger von rechts nach links begünstigt. Im trockenen Zustand des Materials fliessen kurzzeitig influenzierte Ladungen durch den grösseren Stromkreis, und die an $R_a$ gemessene Spannung U geht gegen Null.

In feuchtem Zustand des Materials fliesst ein Dauerstrom. Die treibende Kraft ist der Ausgleich chemischer Potentiale.

Wie bei elektrochemischen Zellen kann an der linken Elektrode Metall in Lösung gehen, während sich an der rechten Elektrode eine Oxidschicht auflöst. Dazu kommen Ionenbewegungen der inneren Oberfläche des Dielektrikums, welche die Tendenz haben, die beim Pressvorgang gespeicherte, elastische und elektrostatische Energie abzubauen. Nimmt zum Beispiel der Wassergehalt in dem Dielektrikum D zu, werden positive Ionen ($A^+$) – solange die Mikroporen noch nicht mit Flüssigkeit gefüllt sind – beweglicher, deren Ladung durch Sauerstoff mit negativer Überschussladung kompensiert wird. Ausserdem nimmt mit dem Wassergehalt die Zahl der beweglichen $H^+$– und $OH^-$-Ionen zu. Die von der Sonde abgegebene elektrische Ladung steigt deswegen gerade in dem Bereich an, in dem der Wassergehalt (oder der Gehalt an anderen polaren Molekülen, die dissoziieren) mit der Sonde gemessen werden soll.

Sonden können mit langen Zuführungskabeln in grössere Gebilde eingebaut werden, in denen die langsame räumlich-zeitliche Variation der Feuchte gemessen werden soll. Sehr einfache Multimeter haben einen Innenwiderstand von 0,1 MOhm; der Isolationswiderstand der üblichen Kabel ist so gross, dass der Anwendungsbereich der Sonde von daher nicht begrenzt ist.

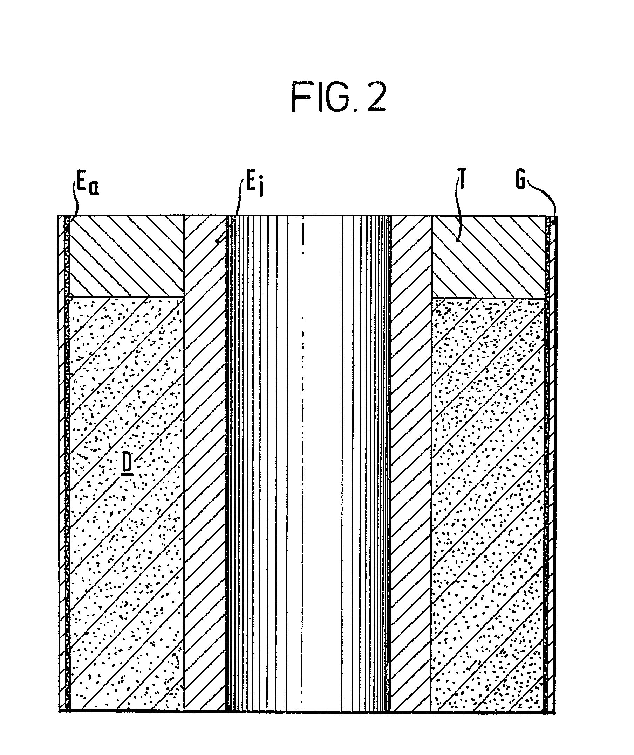

Die in Figur 2 dargestellte Sonde weist eine rohrförmig ausgebildete Innenelektrode $E_i$ aus Messing auf sowie eine äussere Elektrode $E_a$, die aus einem Siebgewebe aus rostfreiem Stahl von 0,1 mm Stärke besteht. (Die Anschlüsse der Elektroden, an denen ein Messgerät anschliessbar ist, sind in der Zeichnung nicht dargestellt). Zur Erleichterung des Pressvorganges ist die Elektrode $E_a$ mit einer Graphitfolie G als äusserem Zylindermantel umgeben. Als Dielektrikum D wurde Zeolith NaX mit einem Druck von einigen kbar eingepresst. Stirnseitig wurde der Druck auf das Dielektrikum von jeweils einem Ring T aus Isoliermaterial – in der Zeichnung ist nur ein Ring dargestellt – aufgenommen. Die Länge und der Durchmesser der Sonde betragen 12 mm.

Eine Sonde der in Figur 2 dargestellten Art wurde versuchsweise zusammen mit einem Temperaturfühler «Pt 100» in ein Vakuumgefäss eingebaut. Über Ventile zur Vakuumpumpe und zu einem Wasserbehälter konnte der $H_2O$ Gasdruck eingestellt werden, der von einem Druckmessgerät angezeigt wurde. Die Elektroden der Sonde waren mit einem 100-kOhm-Widerstand verbunden, an dem eine Spannung U (t) mit einem Multimeter ($R_i = 10$ MOhm) gemessen wurde. Wie sich gezeigt hat, kann der sich langsam ändernde, über ca. 20 Minuten gemittelte Wert $\overline{U}$ der von der Sonde abgegebenen elektrischen Spannung als quantitative Anzeige für den Wassergehalt genommen werden bzw. der nach Abklingen von «Einschaltvorgängen» sich mit dem Wassergehalt langsam ändernde Wert $\overline{U}$ (t). Über einen Zeitraum von 2 Monaten wurden Adsorptions-, Desorptionszyklen verfolgt, um die Reproduzierbarkeit der abgegebenen elektrischen Leistung festzustellen. Wenn über der trockenen Sonde eine Druckerhöhung 2 mbar→P→ 15 mbar eingestellt wird, folgt innerhalb 10 Stunden ein Spannungsanstieg 0→$\overline{U}$→24 mV. Nach einigen Tagen im Gleichgewicht mit dem Wasservorrat erreicht die Sonde U = 30 mV. Beim Abpumpen des $H_2O$ sinkt $\overline{U}$ nach 10 Stunden unter 1 mV.

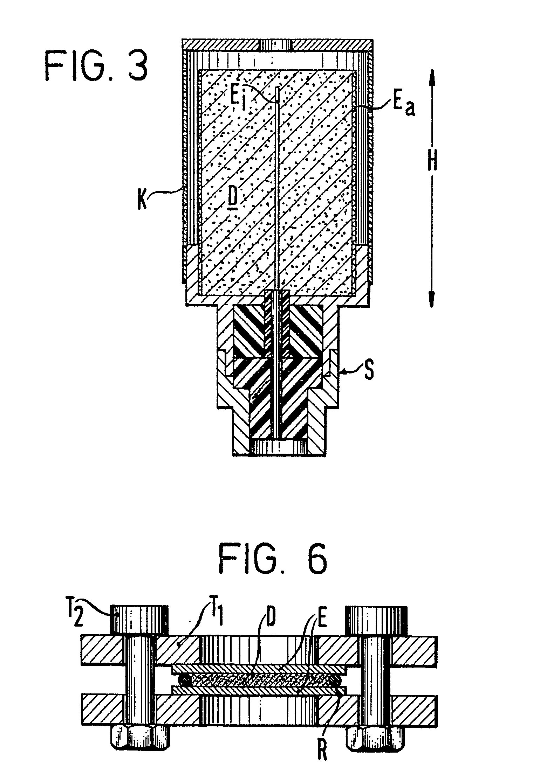

Zur Herstellung der in Figur 3 dargestellten Sonde wurde Zeolith NaX-Pulver in den Zwischenraum zwischen der aus einem zylindrischen Drahtgewebe (Maschenweite 100 μm, Öffnung 44%) bestehenden äusseren Elektrode $E_a$ und der aus einem koaxialen, mit feinem Drahtgewebe aus rostfreiem Stahl umwickelten Innenleiter (Durchmesser = 2 mm) bestehenden Innenelektrode $E_i$ eingefüllt.

Die beiden Elektroden $E_i$ und $E_a$ wurden an einem Ende durch eine Koaxialbuchse auf Distanz gehalten. Mittels einer Presse wurde das Pulver zusammengedrückt. Die Höhe des eingefüllten Pulvers betrug vor dem Pressen etwa 40 mm, nach dem Pressen je nach Druck und Einfülldichte etwa 10 bis 30 mm. Nach dem Pressvorgang wurde die Sonde mit einem äusseren Schutzgitter K versehen, der Innenleiter an die Kontakthülse eines BNC-Kupplungsstückes angelötet, und eine BNC-Buchse für den Anschluss von Koaxialkabel aufgeschraubt.

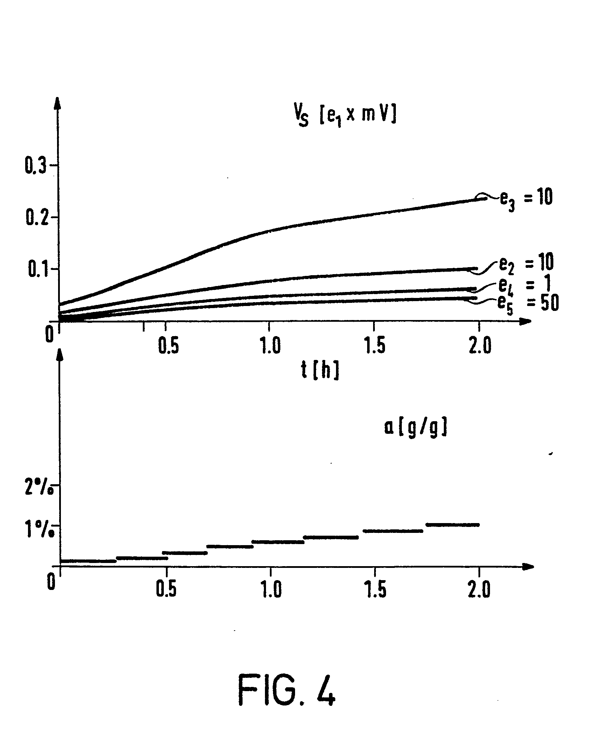

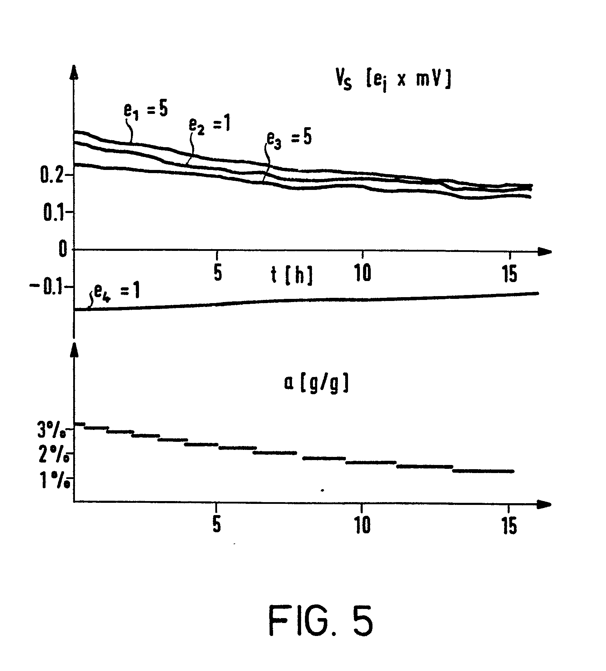

Mit einer Reihe von Sonden der in Figur 3 dargestellten Art wurden Messungen durchgeführt, deren Ergebnis in den Figuren 4 und 5 wiedergegeben ist. Es wurde ein zylindrisch aus NaX-Brei gegossener Zeolithblock (850 cm$^3$) zusammen mit 4 Sonden (sowie Temperaturfühler «Pt 100») in ein Gehäuse gegeben, das heizbar und zu belüften war. Ausserdem konnte über ein Filtertuch, mit welchem das Gehäuse ausgekleidet war, Wasser dem Gehäuse zugeführt werden, wodurch die Feuchtigkeit im Zeolithblock erhöht werden konnte. Der Wassergehalt des Zeolithblocks wurde durch kontinuierlich durchgeführte Gewichtsbestimmungen des Zeolithblocks ermittelt.

Der Zeolithblock und die Sonden wurden in einen trockenen, stationären Zustand gebracht, indem eine Woche lang die Gehäusetemperatur auf 95°C $\leq$ T $\leq$ 100°C gehalten und das Gehäuse durchlüftet wurde. Die von den Sonden abgegebene elektrische Leistung ging dabei auf sehr kleine Werte (pW) zurück. Dann wurde Wasser in einen Vorratsbehälter gegeben, von wo es über ein dünnes Rohr zu dem Filztuch floss, mit dem das Gehäuse ausgekleidet ist. In Figur 4 ist der Verlauf des aus dem Gewicht des Zeolithblocks errechneten Wassergehalts, sowie der zeitgleiche Verlauf der Sondenspannungen wiedergegeben. An den Kurven ist der zu den einzelnen Sonden ($e_2$ bis $e_5$) zugehörige Skalenfaktor $e_i$ angegeben, mit dem die auf der mV-Skala abgelesenen Werte zu multiplizieren sind. Bei der empfindlichsten Sonde beträgt die Spannungsänderung etwa 2 mV pro 1% Wasseraufnahme.

In Figur 5 sind die mit dem Wassergehalt im Bereich unterhalb 3% – nach Oszillationen zu Beginn der Trocknungsphase – synchron abnehmenden Sondenspannungen dargestellt. Die empfindlichste Sonde ($e_1 = 5$) zeigt in diesem Bereich eine Spannungsänderung von 1 mV pro 1% Wasserabnahme.

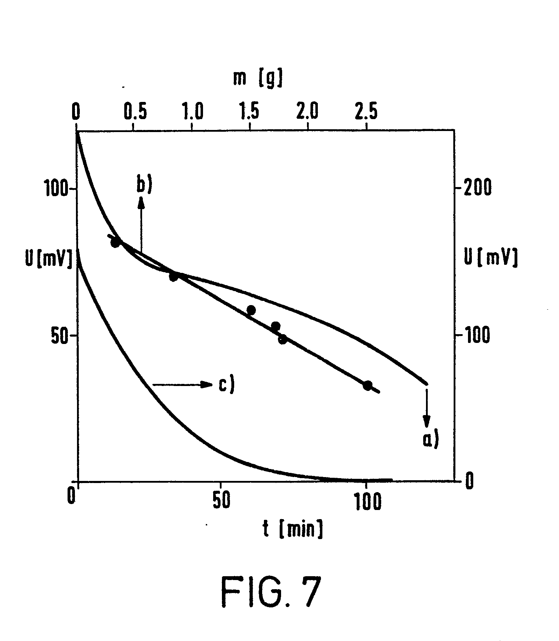

Aus Figur 6 ist ferner der schematische Aufbau einer plattenförmigen Sonde zu entnehmen. Die Elektroden E bestehen aus scheibenförmigen Platten aus CuBe, die durch einen O-Ring R auf Abstand gehalten sind.

Die beiden Platten werden durch zwei mittels Schrauben $T_2$ aus Teflon zusammengepressten Messingringe $T_1$ unter Druck gehalten, wodurch das im Raum zwischen den Elektroden E und dem O-Ring befindliche Material Zeolith NaX unter Druck gesetzt ist.

Es wurden 3,5 g einer polaren, leicht zu verdunstenden Flüssigkeit (Äthanol, Aceton) auf eine der Elektroden der plattenförmigen Sonde gemäss Figur 6 gegeben. Die elektrische Spannung zwischen den Elektroden wurde mit einem hochohmigen Multimeter ($R_1$ = 10 MOhm) gemessen, der Eingang jedoch mit einem Lastwiderstand $R_a$ = 10 kOhm überbrückt.

Beim Verdunsten der Flüssigkeit und somit Trocknen des Sondenmaterials nahm die Sondenspannung in der in Figur 7 gezeigten Weise ab. Kurve a zeigt den zeitlichen Verlauf der Spannung nach Befeuchten mit Ethanol (Skalen links und unten), Kurve b zeigt den Zusammenhang zwischen der gemessenen Spannung und dem Gehalt der Sonde an Ethanol. Kurve c zeigt den zeitlichen Spannungsverlauf nach Befeuchten der Sonde mit Aceton (Skalen rechts und unten).

**Patentansprüche**

1. Verfahren zur Herstellung einer fremdenergiefreien Sonde zur Bestimmung des Gehaltes an dissoziierbaren polaren Flüssigkeiten in Gasen, ausgedehnten festen Körpern, Schüttungen von körnigem Material oder elektrisch nicht leitenden Flüssigkeiten, dadurch gekennzeichnet, dass Pulver einer Körnung im Bereich zwischen 0,001 bis 1 mm aus elastisch verformbarem Material kristalliner oder amorpher Struktur mit wenigstens zum Teil ionischer Bindung und einem spezifischen Widerstand von wenigstens $10^5$ Ohm/cm zwischen zwei Elektroden unter einem Druck von wenigstens etwa 100 bar zusammengepresst und auf Dauer unter Druck gehalten wird, wobei wenigstens ein Teil der das Pulver unter Druck haltenden Teile für die nachzuweisende Flüssigkeit in der Umgebung der Sonde durchlässig ist.

2. Verfahren nach Anspruch 1, dadurch gekennzeichnet, dass als unter Druck zu setzendes Material $Al_2O_3$, $SiO_2$, Schichtsilikate, wie Lehm, Tonerde, Aluminosilikate mit Gerüststruktur NaCl, MgO oder ZnO verwendet werden.

3. Fremdenergiefreie Sonde zur Bestimmung des Gehaltes an dissoziierbaren polaren Flüssigkeiten in Gasen, ausgedehnten festen Körpern, Schüttungen von körnigem Material oder elektrisch nicht leitenden Flüssigkeiten, gekennzeichnet durch zwei einander gegenüberliegende Elektroden (E, $E_i$, $E_a$) und eine oder mehrere zumindest einen Teil des zwischen den Elektroden befindlichen Raumes druckfest einschliessende Teile (T, $T_1$, $T_2$) sowie ein im Raum durch die genannten Teile unter einem Druck von mindestens etwa 100 bar stehendes Pulver (D) einer Körnung im Bereich zwischen 0,001 und 1 mm, das aus einem elastisch verformbaren Material kristalliner oder amorpher Struktur mit wenigstens zum Teil ionischer Bindung und einem spezifischen Widerstand von wenigstens $10^5$ Ohm/cm besteht, wobei wenigstens eine Elektrode und/oder wenigstens ein Teil der den Raum druckfest einschliessenden Teil für die nachzuweisende Flüssigkeit in der Umgebung der Sonde durchlässig ist.

4. Fremdenergiefreie Sonde nach Anspruch 3, dadurch gekennzeichnet, dass wenigstens eine der Elektroden, (E, $E_i$, $E_a$) aus porösem, durckbeständigem und elektrisch leitfähigem Material besteht.

5. Fremdenergiefreie Sonde nach einem der Ansprüche 3 und 4, dadurch gekennzeichnet, dass die für die nachzuweisende Flüssigkeit durchlässige Elektrode aus Sintermetall wie Sinterstahl, aus Metallgewebe oder aus einem Keramikkörper mit darauf aufgebrachter leitfähiger Schicht, wie einem $Al_2O_3$-Körper mit aufgebrachter poröser Metallschicht oder aufliegender Graphitfolie (G), besteht.

6. Fremdenergiefreie Sonde nach Anspruch 3, dadurch gekennzeichnet, dass die Elektroden (E, $E_i$, $E_a$) und die den Raum zwischen den Elektroden druckfest einschliessenden Teile (T, $T_1$, $T_2$) so dimensioniert sind, dass das Verhältnis von Oberfläche zu Volumen des eingeschlossenen Raumes möglichst gross ist.

7. Fremdenergiefreie Sonde nach Anspruch 3, gekennzeichnet durch eine stab- oder rohrförmig ausgebildete Innenelektrode ($E_i$) und eine die Innenelektrode umschliessende Aussenelektrode ($E_a$), zwischen denen sich das unter Druck stehende Material (D) befindet.

8. Fremdenergiefreie Sonde nach Anspruch 5, dadurch gekennzeichnet, dass die Aussenelektrode ($E_a$) aus einem von einer Graphitfolie (G) umgebenen Metallnetz besteht.

9. Fremdenergiefreie Sonde nach Anspruch 3, gekennzeichnet durch zwei plattenförmige Elektroden (E), zwischen denen sich das unter Druck stehende Material befindet.

10. Fremdenergiefreie Sonde nach Anspruch 9, dadurch gekennzeichnet, dass die Elektroden (E) scheibenförmig ausgebildet sind.

11. Fremdenergiefreie Sonde nach Anspruch 10, dadurch gekennzeichnet, dass der zwischen den Elektroden (E) für das unter Druck stehende Material vorgesehene Raum durch eine zwischen den beiden Elektrodenscheiben befindlichen O-Ring (R) abgeschlossen ist und die beiden Elektrodenscheiben über zwei Druckscheiben ($T_1$) unter Druck gesetzt sind.

12. Fremdenergiefreie Sonde nach Anspruch 7, dadurch gekennzeichnet, dass die plattenförmig ausgebildeten Elektroden (E) aus CuBe-Sintermetall bestehen.

**Claims**

1. Process for manufacturing a probe without external power source for determining the content of dissociable polar liquids in gases, extended solid bodies, loose beds of granular material or electrically non-conductive liquids, characterized in that powder of a particle size in the range between 0.001 and 1 mm of an elastically deformable material of crystalline or amorphous structure with at least partially ionic bonding and a specific resistance of at least $10^5$ Ohm/cm is compressed between two electrodes under a pressure of at least approximately 100 bar and kept permanently under pressure, at least one part of the parts keeeping the powder under pressure being permeable to the liquid to be detected around the probe.

2. Process according to Claim 1, characterized in that $Al_2O_3$, $SiO_2$, sedimentary silicates such as clay, argillaceous earth, aluminosilicates with skeletal structure, NaCl, MgO or ZnO are used as the material to be placed under pressure.

3. Probe without external power source for determining the content of dissociable polar liquids in gases, extended solid bodies, loose beds of granular material or electrically non-conducting liquids, characterized by two mutually opposing electrodes (E, $E_i$, $E_a$) and one or several parts (T, $T_1$, $T_2$) which enclose in a pressure-resistant manner at least one part of the space between the electrodes, and a powder (D) held under a pressure of at least approximately 100 bar in the space by the parts referred to with a particle size in the range between 0.001 and 1 mm which consists of an elastically deformable material of crystalline or amorphous structure with at least partially ionic bonding and a specific resistance of at least $10^5$ Ohm/cm, at least one electrode and/or at least one part of the parts which enclose the space in a pressure-resistant manner being permeable to the liquid to be detected around the probe.

4. Probe without external power source according to Claim 3, characterized in that at least one of the electrodes (E, $E_i$, $E_a$) consists of porous, pressure-resistant and electrically conductive material.

5. Probe without external power source according to one of Claims 3 and 4, characterized in that the electrode which is permeable to the liquid to be detected consists of sintered metal, such as sintered steel, of woven metal fabric or of a ceramic body with a superimposed conductive layer such as an $Al_2O_3$ body, with a superimposed porous metal layer or a graphite foil covering (G).

6. Probe without external power source according to Claim 3, characterized in that the electrodes (E, $E_i$, $E_a$) and the parts (T, $T_1$, $T_2$) which enclose the space between the electrodes in a pressure-resistant manner are dimensioned in such a way that the ratio of the surface area to the volume of the enclosed space is as large as possible.

7. Probe without external power source according to Claim 3, characterized by a rod-shaped or tubular inner electrode ($E_i$) and an outer electrode ($E_a$) surrounding the inner electrode, between which electrodes the pressurized material (D) is located.

8. Probe without external power source according to Claim 5, characterized in that the outer electrode ($E_a$) consists of a metal network surrounded by a graphite foil (G).

9. Probe without external power source according to Claim 3, characterized by two plate-shaped electrodes (E) between which the pressurized material is located.

10. Probe without external power source according to Claim 9, characterized in that the electrodes (E) are disc-shaped.

11. Probe without external power source according to Claim 10, characterized in that the space between the electrodes (E) provided for the pressurized material is enclosed by an O-ring (R) between the two electrode discs and the two electrode discs are pressurized by two pressure discs ($T_i$).

12. Probe without external power source according to Claim 7, characterized in that the plate-shaped electrodes (E) consist of CuBe sintered metal.

## Revendications

1. Procédé de fabrication d'une sonde ne nécessitant pas de source d'énergie extérieure et destinée à déterminer la teneur en liquides polaires dissociables de gaz, de corps solides ayant une certaine étendue, de tas de matériaux en grains, ou de liquides non conducteurs de l'électricité, caractérisé en ce qu'il consiste à comprimer, entre deux électrodes et sous une pression d'au moins 100 bars environ, de la poudre ayant une granulométrie comprise entre 0,001 et 1 mm, en une matière déformable élastiquement, de structure cristalline ou amorphe, et ayant au moins en partie une liaison ionique et une résistivité d'au moins 15 ohm/cm, et à les maintenir à demeure sous pression, une partie au moins des pièces maintenant la poudre sous pression étant perméable aux liquides à détecter au voisinage de la sonde.

2. Procédé suivant la revendication 1, caractérisé en ce qu'il consiste à utiliser, comme matériau à mettre sous pression, $Al_2O_3$, $SiO_2$, des silicates en couche, comme de l'argile, de l'alumine, des aluminosilicates à structure zéolithique, NaCl, MgO ou ZnO.

3. Sonde ne nécessitant pas de source d'énergie extérieure et destinée à déterminer la teneur en liquides polaires dissociables de gaz, de corps solides ayant une certaine étendue, de tas de matériaux en grains ou de liquides non conducteurs de l'électricité, caractérisée par deux électrodes (E, $E_i$, $E_a$) opposées et une ou plusieurs pièces (T, $T_1$, $T_2$) délimitant de manière étanche à la pression au moins une partie de l'espace se trouvant entre les électrodes, ainsi qu'une poudre (D) se trouvant dans l'espace défini par lesdites pièces sous une pression d'au moins 100 bars environ et d'une granulométrie comprise entre 0,001 et 1 mm, qui est constituée d'un matériau déformable élastiquement, de structure cristalline ou amorphe, ayant, au moins en partie, une liaison ionique et une résistivité d'au moins 15 ohm/cm, l'une au moins des électrodes et/ou au moins une partie des pièces délimitant l'espace de manière étanche à la pression étant perméable aux liquides à détecter au voisinage de la sonde.

4. Sonde ne nécessitant pas de source d'énergie extérieure suivant la revendication 3, caractérisée en ce que l'une au moins des électrodes (E, $E_i$, $E_a$) est en un matériau poreux, résistant à la pression et conducteur de l'électricité.

5. Sonde ne nécessitant pas de source d'énergie extérieure suivant l'une des revendications 3 et 4, caractérisée en ce que l'électrode perméable aux liquides à détecter est en métal fritté, comme de l'acier fritté, en toile métallique ou en un corps céramique sur lequel est appliquée une couche conductrice, comme un corps en $Al_2O_3$ sur lequel est déposée une couche métallique poreuse ou est appliquée une feuille en graphite (G).

6. Sonde ne nécessitant pas de source d'énergie extérieure suivant la revendication 3, caractérisée en ce que les électrodes (E, $E_i$, $E_a$) et les pièces (T, $T_1$, $T_2$) délimitant de manière étanche à la pression l'espace compris entre les électrodes ont des dimensions telles que le rapport de la surface au volume de l'espace délimité est aussi grand que possible.

7. Sonde ne nécessitant pas de source d'énergie extérieure suivant la revendication 3, caractérisée par une électrode intérieure ($E_i$) en forme de barreau ou de tube et une électrode extérieure ($E_a$) entourant l'électrode intérieure, le matériau (D) sous pression se trouvant entre ces électrodes.

8. Sonde ne nécessitant pas de source d'énergie extérieure suivant la revendication 5, caractérisée en ce que l'électrode extérieure ($E_a$) est en une toile métallique entourée d'une feuille en graphite (G).

9. Sonde ne nécessitant pas de source d'énergie extérieure suivant la revendication 3, caractérisée par deux électrodes (E) en forme de plaque, entre lesquelles se trouve le matériau sous pression.

10. Sonde ne nécessitant pas de source d'énergie extérieure suivant la revendication 9, caractérisée en ce que les électrodes (E) sont en forme de disque.

11. Sonde ne nécessitant pas de source d'énergie extérieure suivant la revendication 10, caractérisée en ce que l'espace prévu entre les électrodes (E) pour le matériau sous pression est fermé par un joint torique (R) se trouvant entre les deux disques formant électrodes, et les deux disques formant électrodes sont mis sous pression par deux disques ($T_1$) d'application d'une pression.

12. Sonde ne nécessitant pas de source d'énergie extérieure suivant la revendication 7, cartactérisée en ce que les électrodes (E) en forme de plaque sont en métal fritté à base de CuBe.

# FIG.1

# FIG. 2

$E_a$     $E_i$     T     G

D

FIG. 3

FIG. 6

FIG. 4

FIG. 5

FIG. 7